# EUROPEAN PATENT SPECIFICATION

(11) **EP 3 987 896 B1**
(45) Date of publication and mention of the grant of the patent: **26.06.2024**
(21) Application number: 21202326.1
(22) Date of filing: 13.10.2021
(51) Int. Cl.: A01B 59/00, A01B 59/042, B60D 1/00, B60D 1/155

(54) **STEERING DRAWBAR**
LENKDEICHSEL
BARRE D'ATTELAGE DE DIRECTION

(30) Priority: 22.10.2020 IT 202000024958
(43) Date of publication of application: 27.04.2022
(73) Proprietor: Rebos Oleodinamica Srl, 46043 Castiglione dell Stiviere (MN) (IT)
(72) Inventor: REBECCHI, Samuele, 46043 CASTIGLIONE DELLE STIVIERE (MN) (IT)
(74) Representative: Mari, Marco Giovanni

(56) References cited:
- EP-A1- 0 485 296
- DE-A1-102007 020 744
- FR-A1- 2 703 955
- US-A- 5 335 856
- Versione-Version Art: "OCCHIONI, TIMONI E SISTEMI DI TRAINO TOWING EYES, DRAWBARS AND TOWING SYSTEMS", , 1 May 2019 (2019-05-01), pages 1-21, XP055813409, Retrieved from the Internet: URL:https://www.rimaspa.com/wp-content/upl oads/2016/09/sez2_84_104.pdf [retrieved on 2021-06-14]

## Description

### Technical field

The present invention relates to the sector of agricultural machinery, in particular it concerns a steering drawbar connecting a tractor and a trailer, for example a sprayer used to spray pesticides, in particular between the rows of orchards and vineyards.

### Prior art

To allow towing also on roads and at the same time to facilitate manoeuvring in the field, in particular when it is necessary to reduce the steering space, so-called steering connection drawbars are used between tractor and trailer.

To facilitate manoeuvring around the closely spaced supporting structures of fruit trees such as, for example, between the rows of vineyards or orchards, the steering point, or centre of rotation, must be transferred to the rear of the drawbar, namely nearer to the trailer than to the tractor, whereas for movement on roads it is preferable for the steering point to be transferred to the front, namely nearer to the tractor than to the trailer.

Traditional steering drawbars essentially comprise:
- a central body with a longitudinal axis of development, having a first and a second end;
- a first swivel connection element for connecting to said tractor, designed to act as a front steering point, associated with said first end of said central body;
- a second swivel connection element for connecting to said trailer, designed to act as a rear steering point, associated with said second end of said central body.

The central body is associated with at least one element sliding on it, providing a support and stable constraint for two front locating elements (towards the tractor) and two rear locating elements (towards the trailer), arranged laterally with respect to the central body.

Said steering drawbars comprise adjustment means, manual or controlled by hydraulic actuators, designed to move said sliding element between an advanced position in which the front locating elements are substantially in abutment on the tractor, preventing the rotation thereof around the first swivel connection element, and a retracted position, in which the rear locating elements are substantially in abutment against the trailer, preventing rotation of the latter around the second swivel connection element.

From the document 202017000133506 a steering drawbar is known comprising a hydraulically operated cylinder provided with a stem and an outer sleeve, telescopically coupled to each other to slide inside each other.

In particular, the central body of the drawbar consists of said stem provided at its ends with the swivel connection elements to tractor and trailer, while the outer sleeve acts as a support element for the front and rear locating elements, moving them between the two above-mentioned work positions, namely between an advanced position in which the front locating elements are substantially in abutment on the tractor and the drawbar rotates around the coupling nearest the trailer, and a retracted position in which the rear locating elements are substantially in abutment against the trailer and the drawbar rotates around the coupling nearest the tractor.

An example of a steering drawbar as described above is also known from the document XP055813409 "Towing eyes, drawbars and towing systems".

The solutions described above have some limits and drawbacks, such as the complexity of construction, the high number of components used, the overall dimensions of the drawbar, the weight and the high production costs.

In particular, the stem of the hydraulic cylinder has fixed minimum dimensions, since it has to couple with said first swivel connection element which is normally an eye with standard geometry in accordance with vehicle approval requirements. This results in the drawback that the outer sleeve of the cylinder and the entire central body of the drawbar have to have even larger dimensions, with problems of overall space occupied, weight and cost of the drawbar.

The main object of the invention is therefore to provide a steering drawbar, for connection between a tractor and a trailer, which is constructively simpler, with a reduced number of components, more compact in terms of volume and space occupied, and consequently lighter and cheaper.

### Presentation of the invention

The objects are achieved by a steering drawbar suitable to be connected in use between a tractor and a trailer, comprising:
- a central body with a longitudinal axis of development, having a first and a second end;
- a first swivel connection element to said tractor, designed to act as front steering point, associated with said first end of said central body;
- a second swivel connection element to said trailer, designed to act as a rear steering point, associated with said second end of said central body;
- a hydraulic circuit,
characterized in that said central body comprises a first and a second hydraulically operated double-acting cylinder, arranged symmetrically with respect to the longitudinal axis of development of said central body, where each double-acting cylinder comprises a sleeve, permanently associated with said central body, and a stem, having a first and a second abutment end, and where said stem is designed to move between a first advanced position towards said tractor with its first abutment end stopping against the tractor to block the rotation of the latter around said first swivel element, and a second retracted position towards said trailer with the second abutment end stopping, at least indirectly, against the trailer to block rotation of the latter around said second swivel element.

According to a first aspect of the invention, said central body comprises a first bracket proximal to said tractor and a second bracket proximal to said trailer, designed to support said first and second double-acting cylinder cooperating with the respective sleeves.

In particular, said first bracket is stably associated with said first swivel connection element to said tractor, while said second bracket is stably associated with said second swivel connection element to said trailer.

In a preferred variation, the first abutment ends of each stem comprise spherical heads.

Advantageously, said spherical heads are associated with said first abutment ends by means of screw adjustment means.

According to a possible embodiment variation of the invention, each double-acting cylinder comprises a first and a second chamber for the oil and said hydraulic circuit comprises pipes connected to said chambers.

Preferably, said hydraulic circuit comprises stop valves designed to prevent the reflux of oil from said chambers towards said pipes.

The invention also concerns a spraying machine comprising a trailer with steering drawbar as described above.

The steering drawbar according to the invention has numerous advantages.

The main advantage lies in the possibility of easily switching the central body of the drawbar between a first operating condition, useful in the field, in which the first swivel connection element is blocked in order not to rotate and the trailer can steer with respect to the drawbar, and a second operating condition, necessary for movement on roads, in which the second swivel connection element is blocked in order not to rotate and the tractor can steer with respect to the drawbar.

Advantageously, said steering drawbar allows the steering radius to be reduced in crops with closely spaced supporting structures, as in vineyards and orchards, maintaining reduced overall dimensions but at the same time guaranteeing considerable mechanical strength.

The components of the steering drawbar are simple: only a few construction parts and low production costs.

The sturdiness of the drawbar advantageously entails a reduction in risks of breakage with consequent economic advantages, also reducing machine standstill times for maintenance and replacements.

Even more advantageously, said steering drawbar is able to allow any type of movement (pitching, rolling, swerving) of the tractor with respect to the trailer and vice versa, also on uneven ground and with marked misalignments.

The switching of the two operating conditions can be carried out directly on board the tractor by the user by means of a control unit of the hydraulic circuit, therefore without the need for the user to act manually, thus improving the safety level.

### Brief description of the drawings

The advantages of the invention will become clearer below, in the description of a preferred embodiment, by way of non-limiting example and with the help of the figures where:

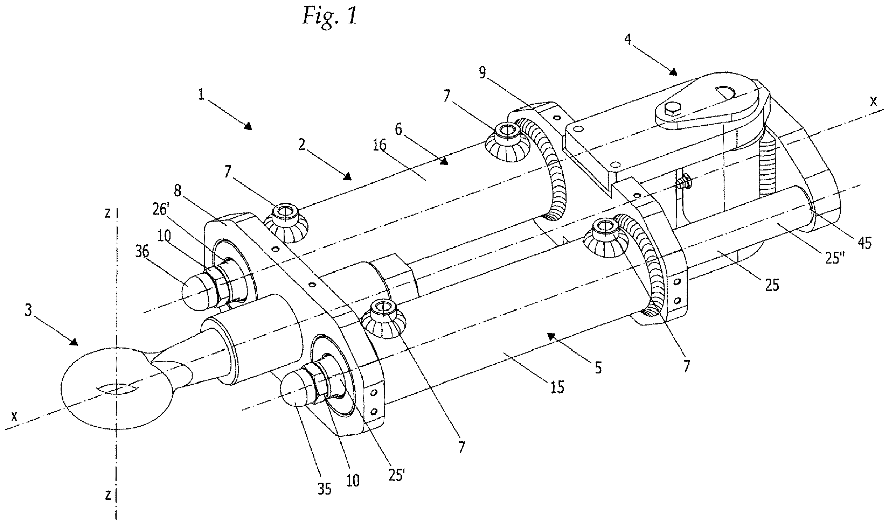

Fig. 1, 2 and 3 illustrate, respectively in axonometric view, in plan view from above and in longitudinal section offset along two vertical planes parallel to each other, a steering drawbar according to the invention;
Fig. 4 and 5 illustrate, in longitudinal section along a vertical plane and along a horizontal plane respectively, the steering drawbar of Fig. 1 in a first work phase;

Fig. 6 and 7 illustrate, in longitudinal section along a vertical plane and along a horizontal plane respectively, the steering drawbar of Fig. 1 in a second work phase.

### Detailed disclosure of a preferred embodiment of the invention

With reference to the Figures a steering drawbar 1 is illustrated for connection between a tractor and a trailer associated with an agricultural implement. Preferably, the agricultural implement transported by the trailer comprises an atomizer for composing a spraying machine.

Said steering drawbar 1 comprises:
- a central body 2 with a longitudinal axis of development x, having a first and a second end;
- a first swivel connection element 3 to said tractor, associated with said first end of said central body 2;
- a second swivel connection element 4 to said trailer, associated with said second end of said central body 2.

Said first swivel connection element 3 substantially comprises a joint, the so-called eye, designed to rotate around a vertical axis z orthogonal to the vehicle supporting surface. The rotation of said first swivel connection element 3 allows the tractor to steer during towing of the trailer in ordinary road transit conditions.

Said second swivel connection element is designed to cooperate with an articulated joint rotating at least around a vertical axis, orthogonal to the vehicle supporting surface. The rotation of said second swivel connection element 4 inside said articulated joint allows the trailer to steer with respect to tractor in working conditions between the rows by over 90°. In a variation not illustrated, there may also be a joint rotating around a horizontal axis, orthogonal to the axis of horizontal development x, to allow also a pitching movement, due to the forward and backward inclinations of the tractor with respect to the trailer due to the unevenness of the ground.

Said central body 2 comprises a first 5 and a second 6 hydraulically operated double-acting cylinder, arranged symmetrically with respect to the longitudinal axis of development x of said central body 2, alongside the same.

Each double-acting cylinder 5, 6 comprises a sleeve 15, 16, permanently associated with said central body 2, and a stem 25, 26, having a first 25', 26' and a second 25", 26" abutment end, sliding axially inside said sleeve 15, 16.

In the variation illustrated, the two sleeves 15, 16 of the two double-acting cylinders 5, 6 compose said central body 2, while the first 25', 26' and the second 25", 26" abutment ends of the two stems 25, 26 act as a locating element cooperating alternatively with said tractor or said trailer.

The first abutment ends 25', 26' of each stem 5, 6 comprise spherical heads 35, 36: the spherical shape of the heads guarantees that they rest stably against the tractor also in the presence of misalignments due to unevenness of the ground surface over which the tractor and trailer travel in sequence.

As can be seen from the figures, said spherical heads 35, 36 are associated with said first ends 25', 26' of said stems 25, 26 by screw adjustment means 10 able to further increase, with precision adjustments, the extension of the stems 25, 26 of said double-acting cylinders 5, 6, adapting them to different types of tractors.

The second abutment ends 25", 26" of each stem 25, 26 comprise flat heads 45, 46 in order to rest more securely against the trailer by means of the second swivel connection element 4, comprising a rotating articulated joint, stably associated with the trailer, for example by means of welding.

Said central body 2 comprises a first bracket 8 proximal to said tractor and a second bracket 9 proximal to said trailer, both designed to support said first 5 and second 6 double-acting cylinder, cooperating with the respective sleeves 15, 16.

Said first bracket 8, along the longitudinal axis of development x, is stably associated with said first swivel connection element 3 to said tractor, namely said eye.

Said second bracket 9 is stably associated with said second swivel connection element 4 to said trailer.

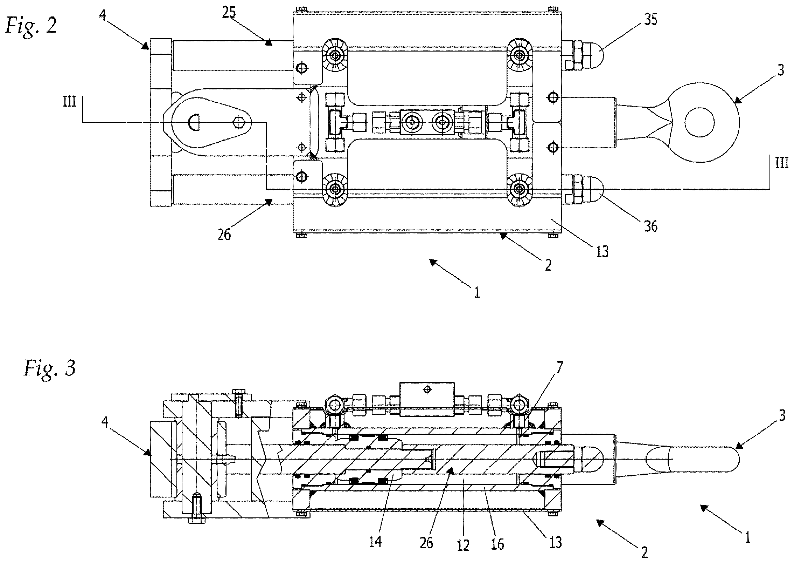

For reasons of safety and protection, said central body 2 is totally enclosed by a casing 13 (shown in Fig. 2) associated with said first 8 and second 9 bracket.

Said steering drawbar 1 further comprises a hydraulic circuit comprising pipes designed to be connected, by means of specific connections 7 and non-return or anti-reflux valves (not illustrated), to said first 5 and second 6 double-acting cylinder.

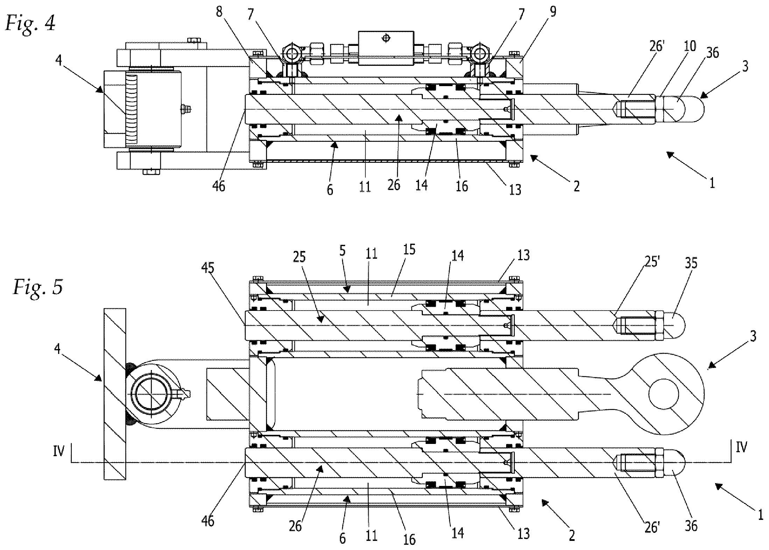

As can be seen from the sections of Fig. 4-7, between the sleeve 15, 16 and the stem 25, 26 of each double-acting piston 5, 6 a dual inlet chamber 11, 12 is provided for the oil coming from said hydraulic circuit.

In detail, a transverse partition14 interposed between the outer surface of said stem 25, 26 and the inner surface of said sleeve 15, 16 creates said dual chamber 11, 12. The pipes of the hydraulic circuit are connected to the two separate portions 11, 12 of the chamber: the oil under pressure inside a chamber portion 11, 12 causes the stem 15, 16 to extend in one direction and vice versa.

Said hydraulic circuit comprises a safety valve assembly integral with said carter 13. In particular, said valve assembly comprises stop valves designed to prevent the reflux of oil from said chamber 11, 12 towards said pipes.

Operation of the steering drawbar 1 according to the invention is described below.

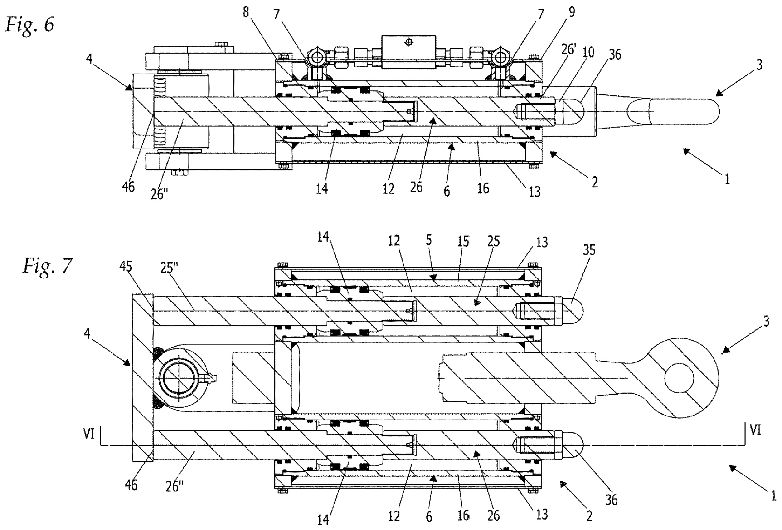

The stem 25, 26 of each double-acting piston 5, 6 is designed to move between a first advanced position towards said tractor (Fig. 4 and 5) with its first abutment end 25', 26' stopping against the tractor to block rotation of the latter around said first swivel element 3, and a second retracted position towards said trailer (Fig. 6 and 7) and its second end 25", 26" stopping, at least indirectly, against the trailer to block rotation of the latter around said second swivel element 4.

It is clear that said first advanced position blocks the steering movement of the tractor and is a first condition, illustrated in Fig. 4 and 5, typical of when the spraying machine, or the agricultural machine in general, is operating in a field, between the rows of a vineyard or an orchard, when the steering space is reduced.

Vice versa, said second retracted position blocks the steering movement of the trailer and is a second condition, illustrated in Fig. 6 and 7, typical of when the spraying machine, or the agricultural machine in general, has to be moved by road from one work area to another.

## Claims

1. A steering drawbar (1) suitable to be connected in use between a tractor and a trailer, comprising:
- a central body (2) with a longitudinal axis of development (x), having a first and a second end;
- a first swivel connection element (3) to said tractor, designed to act as a front steering point, associated with said first end of said central body;
- a second swivel connection element (4) to said trailer, designed to act as a rear steering point, associated with said second end of said central body;
- a hydraulic circuit, **characterised in that** the central body comprises a first and a second hydraulically operated double-acting cylinder, arranged simmetrically with respect to the longitudinal axis of development of said central body, where each double-acting cylinder comprises a sleeve, permanently associated with said central body, and a stem, having a first and a second abutment end, and where said stem is designed to move between a first advanced position towards said tractor with its first abutment end stopping against the tractor to block the rotation of the latter around said first swivel element, and a second retracted position towards said trailer with the second abutment end stopping, at least indirectly, against the trailer to block rotation of the latter around said second swivel element.

2. The steering drawbar (1) according to claim 1, **characterized in that** said central body (2) comprises a first bracket (8) proximal to said tractor and a second bracket (9) proximal to said trailer, designed to support said first (5) and second (6) double-acting cylinder cooperating with the respective sleeves (15, 16).

3. The steering drawbar (1) according to claim 2, **characterized in that** said first swivel connection element (3) to said tractor is stably associated with said first bracket (8).

4. The steering drawbar (1) according to claim 2, **characterized in that** said second swivel connection element (4) to said trailer is stably associated with said second bracket (9).

5. The steering drawbar (1) according to claim 1, **characterized in that** the first abutment ends (25', 26') of each stem (25, 26) comprise spherical heads (35, 36).

6. The steering drawbar (1) according to claim 5, **characterized in that** said spherical heads (35, 36) are associated with said first ends (25', 26') by screw adjustment means (10).

7. The steering drawbar (1) according to claim 1, **characterized in that** each double-acting cylinder (5, 6) comprises a first (11) and a second (12) chamber for the oil, and said hydraulic circuit comprises pipes connected to said chambers (11, 12).

8. The steering drawbar (1) according to claim 7, **characterized in that** said hydraulic circuit comprises stop valves designed to prevent the reflux of oil from said first and second chamber (11, 12) towards said pipes.

9. A spraying machine comprising a trailer with steering drawbar (1) according to at least one of the preceding claims.

## Patentansprüche

1. Eine Lenkdeichsel (1), geeignet, bei Verwendung zwischen einem Traktor und einem Anhänger angeschlossen zu werden, umfassend:
- einen zentralen Körper (2) mit einer Längsentwicklungsachse (x), der ein erstes und ein zweites Ende aufweist;
- ein erstes schwenkbares Verbindungselement (3) zu dem besagten Traktor, dazu vorgesehen, um als vorderer Lenkpunkt zu dienen, verbunden mit dem besagten ersten Ende des besagten zentralen Körpers;
- ein zweites schwenkbares Verbindungselement (3) zu dem besagten Anhänger, dazu vorgesehen, um als hinterer Lenkpunkt zu dienen, verbunden mit dem besagten zweiten Ende des besagten zentralen Körpers;
- einen hydraulischen Kreislauf, **dadurch gekennzeichnet, dass** der zentrale Körper einen ersten und einen zweiten hydraulisch betätigten doppeltwirkenden Zylinder umfasst, der symmetrisch in Bezug auf die Längsentwicklungsachse des besagten zentralen Körpers angeordnet ist, wobei jeder doppeltwirkender Zylinder eine Hülse umfasst, die permanent mit dem besagten zentralen Körper verbunden ist, und einen Schaft, der ein erstes und ein zweites Anschlagende aufweist, und wobei der besagte Schaft dazu vorgesehen ist, um sich zwischen einer ersten vorgeschobenen Position in Richtung des besagten Traktors zu bewegen, wobei sein erstes Anschlagende gegen den Traktor anschlägt, um die Drehung des letzteren um das besagte erste schwenkbare Element zu blockieren, und einer zweiten zurückgezogenen Position in Richtung des besagten Anhängers, wobei das zweite Anschlagende zumindest indirekt gegen den Anhänger anschlägt, um die Drehung des letzteren um das besagte zweite schwenkbare Element zu blockieren.

2. Die Lenkdeichsel (1) gemäß Anspruch 1, **dadurch gekennzeichnet, dass** der besagte zentrale Körper (2) eine erste Halterung (8) in der Nähe des besagten Traktors und eine zweite Halterung (9) in der Nähe des besagten Anhängers umfasst, dazu vorgesehen, den besagten ersten (5) und den besagten zweiten (6) doppeltwirkenden Zylinder zu unterstützen, die mit den jeweiligen Hülsen (15, 16) zusammenwirken.

3. Die Lenkdeichsel (1) gemäß Anspruch 2, **dadurch gekennzeichnet, dass** das besagte erste schwenkbare Verbindungselement (3) zu dem besagten Traktor stabil mit der besagten ersten Halterung (8) verbunden ist.

4. Die Lenkdeichsel (1) gemäß Anspruch 2, **dadurch gekennzeichnet, dass** das besagte zweite schwenkbare Verbindungselement (3) zu dem besagten Anhänger stabil mit der besagten zweiten Halterung (8) verbunden ist.

5. Die Lenkdeichsel (1) gemäß Anspruch 1, **dadurch gekennzeichnet, dass** die ersten Anschlagenden (25', 26') jedes Schafts (25, 26) kugelförmige Köpfe (35, 36) umfassen.

6. Die Lenkdeichsel (1) gemäß Anspruch 5, **dadurch gekennzeichnet, dass** die besagten kugelförmigen Köpfe (35, 36) mit den besagten ersten Enden (25', 26') durch Schraubeneinstellmittel (10) verbunden sind.

7. Die Lenkdeichsel (1) gemäß Anspruch 1, **dadurch gekennzeichnet, dass** jeder doppeltwirkende Zylinder (5, 6) eine erste (11) und eine zweite (12) Kammer für das Öl umfasst und der besagte hydraulische Kreislauf Leitungen umfasst, die mit den besagten Kammern (11, 12) verbunden sind.

8. Die Lenkdeichsel (1) gemäß Anspruch 7, **dadurch gekennzeichnet, dass** der besagte hydraulische Kreislauf Absperrventile umfasst, dazu vorgesehen, den Rückfluss von Öl aus der besagten ersten und zweiten Kammer (11, 12) in Richtung der besagten Leitungen zu verhindern.

9. Eine Spritzmaschine, umfassend einen Anhänger mit Lenkdeichsel (1) gemäß mindestens einem der vorhergehenden Ansprüche.

## Revendications

1. Barre d'attelage de direction (1) pour la connexion entre un tracteur et une remorque, comprenant :
- un corps central (2) avec un axe de développement longitudinal (x), ayant une première et une seconde extrémité ;
- un premier élément de liaison pivotant (3) avec ledit tracteur, conçu pour servir de point de direction avant, associé à la première extrémité dudit corps central ;
- un second élément de connexion pivotant (4) à ladite remorque, conçu pour agir en tant que point de direction arrière, associé à la seconde extrémité dudit corps central ;
- un circuit hydraulique, **caractérisé par le fait que** ledit corps central comprend un premier et un second vérins à double effet à commande hydraulique, disposés symétriquement par rapport à l'axe longitudinal de développement dudit corps central, où chaque vérin à double effet comprend une chemise, associée de façon permanente audit corps central, et une tige, ayant une première et une seconde extrémité de butée, et où ladite tige est conçue pour se déplacer entre une première position avancée vers ledit tracteur avec sa première extrémité de butée s'arrêtant contre le tracteur pour bloquer la rotation de ce dernier autour dudit premier élément pivotant, et une seconde position rétractée vers ladite remorque avec la seconde extrémité de butée s'arrêtant, au moins indirectement, contre la remorque pour bloquer la rotation de cette dernière autour dudit second élément pivotant.

2. Barre d'attelage de direction (1) selon la revendication 1, **caractérisée par le fait que** ledit corps central (2) comprend un premier support (8) proche dudit tracteur et un second support (9) proche de ladite remorque, destinés à supporter lesdits premier (5) et second (6) vérins à double effet coopérant avec les manchons respectifs (15, 16).

3. Barre d'attelage de direction (1) selon la revendication 2, **caractérisée par le fait que** ledit premier élément de liaison pivotant (3) audit tracteur est associé de manière stable audit premier support (8).

4. Barre d'attelage de direction (1) selon la revendication 2, **caractérisée par le fait que** ledit second élément de connexion pivotant (4) à ladite remorque est associé de manière stable audit second support (9).

5. Barre d'attelage de direction (1) selon la revendication 1, **caractérisée par le fait que** les premières extrémités de butée (25', 26') de chaque tige (25, 26) comprennent des têtes sphériques (35, 36).

6. Barre d'attelage de direction (1) selon la revendication 5, **caractérisée par le fait que** lesdites têtes sphériques (35, 36) sont associées auxdites premières extrémités (25', 26') par des moyens de réglage à vis (10).

7. Barre d'attelage de direction (1) selon la revendication 1, **caractérisée par le fait que** chaque vérin double effet (5, 6) comprend une première (11) et une seconde (12) chambre pour l'huile, et que ledit circuit hydraulique comprend des tuyaux reliés auxdites chambres (11, 12).

8. Barre d'attelage de direction (1) selon la revendication 7, **caractérisée par le fait que** ledit circuit hydraulique comprend des vannes d'arrêt destinées à empêcher le reflux de l'huile de ladite première et seconde chambre (11, 12) vers lesdits tuyaux.

9. Machine de pulvérisation comprenant une remorque avec barre d'attelage de direction (1) selon au moins l'une des revendications précédentes.
